# EUROPEAN PATENT APPLICATION

(11) **EP 2 184 466 A2**
(43) Date of publication of application: **12.05.2010**
(21) Application number: 09252542.7
(22) Date of filing: 02.11.2009
(51) Int. Cl.: F02C 7/262, F02C 9/28

(54) **Aircraft engine relight method**

(30) Priority: 07.11.2008 GB 0820410
(71) Applicant: Goodrich Control Systems, Solihull West Midlands B90 4LA (GB)
(72) Inventor: Milnes, Thomas James, Solihull, West Midlands B92 0AL (GB)
(74) Representative: Bailey, Richard Alan

(57) **Abstract**

An engine windmill relight method is described for use with a fuel control system (FCS) having a metering valve (MV) (18), the method comprising the steps of determining a desired fuel delivery rate, and moving the MV (18) to a nominal fuel delivery setting higher than that corresponding to the desired fuel delivery rate.

## Description

This invention relates to a method for use in relighting an aircraft engine, and in particular to a fuel system control method for such applications.

A typical engine fuel control system (FCS) for a gas turbine engine comprises a metering valve (MV) operable to control the supply of fuel from a supply line connected to the output of a high pressure fuel pump to a delivery line. A pressure drop control valve (PDCV) monitors the fuel pressure drop (MVΔP) across the MV and is used to control the operation of a spill valve to maintain a substantially uniform MVΔP, in use. The MVΔP is usually held at a value falling within the range of 70 to 125 psid. A pressure raising and shut off valve (PRSOV) is connected to the delivery line and controls the delivery of fuel therefrom to the burners of the associated engine, whilst maintaining sufficient fuel pressure elsewhere in the FCS to ensure the correct operation of other fuel pressure operated equipment.

The high pressure fuel pump is typically driven from an accessory gear box connected to and driven by the associated engine. As a result, the operating speed of the pump, and hence the rate of fuel supply to the supply line, is related to the operating speed of the associated engine.

Under normal engine operating conditions, the FCS operates effectively. However, when the operating or rotary speed of the engine is low, such as in a windmill relight condition, as the operating speed of the fuel pump is related to the engine operating speed, it will be appreciated that relatively little fuel is delivered by the fuel pump to the MV and the remainder of the FCS. For example, in a windmill relight condition, the engine speed may be as low as 5% of its normal maximum operating speed. The low operating speed of the pump, in combination with any internal, parasitic leakage within the FCS, impacts upon the rate at which fuel is delivered to the engine burners, and may result in insufficient fuel being delivered to allow relighting of the engine.

One potential solution to this problem is to increase the displacement of the fuel pump to increase the rate of fuel delivery thereby. However, to achieve a sufficient increase in fuel delivery would require the fuel pump displacement to be increased by a significant amount, resulting in an undesirable increase in the weight and dimensions of the fuel pump.

US 5129221 describes a fuel control system in which, if the associated aircraft is at an altitude higher than a predetermined level and a windmill relight operation is required, the normal operating fuel control law is replaced by a law specific to that altitude. The arrangement is of complex form.

An object of the invention is to provide an engine windmill relight method of simple and convenient form and in which the disadvantages set out hereinbefore are overcome or are of reduced effect.

According to the present invention there is provided an engine windmill relight method for use with a fuel control system (FCS) having a metering valve (MV), the method comprising the steps of determining a desired fuel delivery rate, and moving the MV to a nominal fuel delivery setting higher than that corresponding to the desired fuel delivery rate.

Such an arrangement is advantageous in that engine windmill relighting may be achieved in a reliable, simple and convenient manner.

The method is preferably incorporated into a control scheme which causes the MV to be moved to the overtravel position in which the nominal fuel delivery setting is higher than that corresponding to the desired fuel delivery rate. The control scheme is preferably incorporated into an EEC using a specific software routine. When a windmill relight is initiated, the software routine preferably commands the MV overtravel position by changing the control of the MV. Alternatively, the software routine could affect the sensed position of the spool of the MV in such a way that an MV closed loop control recognises a need for a change in MV position and initiates this change.

The invention will further be described, by way of example, with reference to the accompanying drawings, in which:
Figure 1 is a diagrammatic view of a fuel control system; and
Figure 2 is a diagrammatic view illustrating the method of an embodiment of the invention.

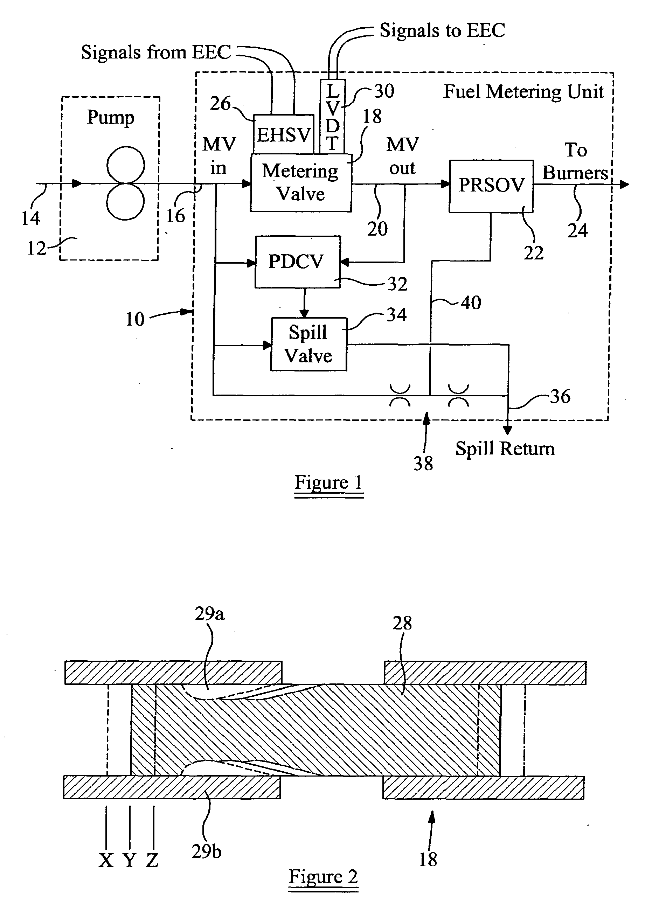

Referring firstly to Figure 1 there is illustrated a fuel control system (FCS) 10 comprising a high pressure fuel pump 12 operable to supply fuel from an input line 14 to a supply line 16. A metering valve (MV) 18 is connected to the supply line 16 and is operable to control the delivery of fuel to a delivery line 20. A pressure raising and shut off valve (PRSOV) 22 is connected to the delivery line 20 and is operable to control the delivery of fuel to a line or manifold 24 connected to the burners of an associated engine.

The MV 18 is controllable by an electro hydraulic servo valve (EHSV) 26 operable, under the control of an associated engine control unit, often referred to as an EEC, to control the fuel pressures applied to opposite ends of a MV spool 28 and thereby control the position occupied by the spool 28. A linear variable differential transducer (LVDT) 30 is operable to sense the position of the spool 28 and thereby permit closed loop control of the MV 18.

A pressure drop control valve (PDCV) 32 is connected between the supply and delivery lines 16, 20, monitoring the pressure drop (MVΔP) across the MV 18, and controls the operation of a spill valve 34 to maintain a substantially fixed MVΔP in normal use. As illustrated, the spill valve 34 is connected between the supply line 16 and a spill return line 36. An orifice potentiometer network 38 is also connected between the supply and spill return lines 16, 36, applying fuel at an intermediate pressure to a line 40 connected to the PRSOV 22, assisting a spring in urging the PRSOV 22 towards a closed position.

In normal use, the fuel pump 12 is driven at a speed related to the rotary speed of the associated engine. Fuel is delivered at a rate controlled by the MV 18 through the PRSOV 22 to the engine burners. The PRSOV 22, in combination with the MV 18, ensures that an adequate fuel pressure is maintained to ensure proper operation of fuel pressure operated equipment associated with the FCS 10 and engine.

In the event of an engine windmill relight condition in which the engine is rotated due to the action of the airstream incident upon the compressor blades thereof, the fuel pump 12 is driven at a correspondingly slow speed. As a result, the rate of fuel delivery thereby is low. In order to achieve relighting of the engine, a predetermined rate of fuel delivery to the burners is required, and the MV 18 would normally be controlled so as to occupy a position equivalent to this delivery rate. The low fuel output rate from the pump 12, in combination with any parasitic leakage losses within components of the FCS 10, may result in the actual fuel delivery rate to the PRSOV 22 and burners being lower than the nominal rate associated with that setting of the MV 18, and consequently lower than the required predetermined rate. The actual fuel delivery rate to the burners may be sufficiently low that engine windmill relighting is not possible, or is unreliable.

In accordance with the invention, when windmill relighting is required and the MV 18 is in an initially closed position, the spill valve 34 is moved to a closed position, under the control of the PDCV 32 due to the low MVΔP. This ensures that the full output from the fuel pump 12, other than parasitic leakage losses, is available to the MV 18, so that when the MV 18 opens the majority of the output from the fuel pump is supplied to the PRSOV 22 via the MV 18. The PRSOV 22 is initially closed due to the low fuel pressure in the delivery line 20. As soon as the MV 18 starts to open and the pressure in the delivery line 20 increases, this increasing pressure in the delivery line 20 is sufficient to overcome the combination of the spring force urging the PRSOV 22 towards a closed position and the pressure in the line 40, such that the PRSOV 22 starts to open and the majority of the output from the fuel pump is delivered to the engine burners. This immediate opening of the PRSOV 22 is achieved by virtue of the fact that at the point when the MV 18 opens there is relatively low pressure in the line 40 since the pressures on either side of the orifice potentiometer network 38 in the supply and spill return lines 16, 36 are also relatively low. When windmill relight is commanded, either automatically by the EEC or at the initiation of the pilot, a desired fuel delivery rate is determined, but rather than moving the MV 18 to a setting equivalent to the desired fuel delivery rate, the MV 18 is moved to an over-travel position in which the nominal fuel delivery rate is higher than the commanded, desired fuel delivery rate. For example, if the required fuel delivery rate to achieve windmill relight is of the order of 300 lbs per hour (pph), the MV 18 may be moved to a position in which the nominal fuel delivery rate is, say 700 pph. Although the nominal fuel delivery rate for this setting of the MV 18 is 700 pph, the low fuel output rate from the fuel pump 12, in combination with the parasitic leakage losses, results in the actual fuel delivery rate being of the order of 300 pph, as required for windmill relighting. Referring to Figure 2, when the spool 28 occupies position X, a MV profile 29a is blocked off by a MV sleeve 29b and the MV 18 is closed. In position Y, the MV profile 29a is partially uncovered from the MV sleeve 29b and the MV 18 delivers fuel at a nominal rate of 300 pph. In position Z, an increased area of the MV profile 29a, relative to position Y, is uncovered from the MV sleeve 29b and the nominal delivery rate is 700 pph. Thus, when windmill relighting is required and the desired fuel delivery rate is of the order of 300 pph, it will be appreciated that the spool 28 is moved considerably beyond the nominal 300 pph position (position Y) and is instead moved to position Z in which the nominal fuel delivery rate is 700 pph.

It will be appreciated that by controlling the FCS in this manner, an adequate fuel delivery rate to permit windmill relighting can be ensured. In addition to ensuring that a desired delivery rate is attained in such conditions, another benefit of the invention is that the operating pressure of the system in such circumstances is considerably lower than the usual system pressure. The reduction in system pressure results in a reduction in parasitic leakage losses, thus further increasing the ability of the FCS to ensure that fuel delivery to the burners at an adequate rate to achieve windmill relighting is attained.

Once windmill relighting has taken place and the engine is operating at normal operating speeds, the output rate of the fuel pump 12 is sufficiently high to ensure that the fuel demand can be met, and the parasitic leakage losses can be accommodated. Once this condition is reached, the MV 18 can be controlled so as to occupy its normal position for a given desired output.

The control scheme causing the MV 18 to be moved to the aforementioned overtravel position is incorporated into the EEC using a specific software routine. When a windmill relight is initiated, the software routine commands the MV overtravel position by changing the control of the EHSV 26, which in turn alters the fuel pressures applied to opposite ends of the MV spool 28 and thereby alters the position occupied by the spool 28, as described hereinbefore. Alternatively, the software routine could affect the sensed position of the spool 28 provided by the LVDT in such a way that the MV closed loop control recognises a need for a change in MV position and initiates this change as described above.

The position to which the MV 18 is moved in a windmill relight condition is conveniently chosen to ensure that windmill relighting will occur even in a worst case scenario, taking into account air temperature, altitude and other relevant factors.

Although a specific form of FCS 10 is described hereinbefore, it will be appreciated that the invention is not restricted to the specific arrangement described and illustrated and that a number of modifications and alterations may be made thereto without departing from the scope of the invention. Further, it will be appreciated that a range of fuel pumps may be used. For example, the arrangement illustrated uses a gear pump as the fuel pump, but arrangements including, for example, a vane or piston pump are also possible. A number of other modifications and alterations are also possible.

## Claims

1. An engine windmill relight method for use with a fuel control system (FCS) having a metering valve (MV) (18), the method comprising the steps of determining a desired fuel delivery rate, and moving the MV (18) to a nominal fuel delivery setting higher than that corresponding to the desired fuel delivery rate.

2. A method according to Claim 1, wherein the method is incorporated into a control scheme which causes the MV (18) to be moved to an overtravel position in which the nominal fuel delivery setting is higher than that corresponding to the desired fuel delivery rate.

3. A method according to Claim 2, wherein the control scheme is incorporated into an EEC using a specific software routine.

4. A method according to Claim 3, wherein the software routine commands the MV (18) overtravel position by changing the control of the MV (18).

5. A method according to Claim 3, wherein the software routine modifies the sensed position of the spool of the MV (18) in such a way that an MV closed loop control recognises a need for a change in MV (18) position and initiates this change.

6. A method according to any of the preceding claims, further comprising providing a pressure raising and shut-off valve PRSOV (22), and controlling the operation thereof so that the PRSOV (22) opens upon movement of the MV (18) to the said nominal fuel setting.

7. A method according to Claim 6, wherein the PRSOV (22) is controlled, in part, by applying a control pressure thereto lower than the pressure applied to the MV (18).

8. A method according to Claim 6 or Claim 7 wherein, prior to moving the MV (18) to the said nominal fuel setting the MV (18) and PRSOV (22) are both closed.

9. A method according to any of the preceding claims, further comprising a step of subsequently, after re-lighting has occurred, determining a second desired fuel delivery rate and moving the MV (18) to a second nominal fuel delivery setting corresponding to that fuel delivery rate.

10. A method according to any of the preceding claims, wherein the said nominal fuel delivery setting is a predetermined overtravel position.
